# EUROPÄISCHE PATENTANMELDUNG

(11) **EP 1 729 389 A1**
(43) Veröffentlichungstag der Anmeldung: **06.12.2006**
(21) Anmeldenummer: 06010131.8
(22) Anmeldetag: 17.05.2006
(51) Int. Cl.: H02G 11/00, F16L 3/015, F16L 3/26

(54) **Leitungsführungeinrichtung für biegbare elektrische oder fluidische Leitungen**

(30) Priorität: 03.06.2005 DE 202005008668 U
(71) Anmelder: Festo AG & Co., 73734 Esslingen (DE)
(72) Erfinder: Feyrer, Thomas, 73734 Esslingen (DE)
(74) Vertreter: Abel, Martin

(57) **Zusammenfassung**

Es handelt sich um eine Leitungsführungseinrichtung für biegbare elektrische und/oder fluidische Leitungen, mit mindestens einem einen variierbaren Längsverlauf aufweisenden Leitungsführungsstrang (5), der in Längsrichtung von mindestens einem Leitungs-Aufnahmekanal (8) durchzogen ist. Der Leitungsführungsstrang (5) ist von einem aus Material mit gummielastischen Eigenschaften bestehenden flexiblen Profilteil gebildet, das über seinen Umfang verteilt mehrere jeweils einen Leitungs-Aufnahmekanal (8) bildende hinterschnittene Längsnuten mit durch elastische Verformung des Profilteilmaterials aufweitbarem Nuthals (15) aufweist.

## Beschreibung

Die Erfindung betrifft eine Leitungsführungseinrichtung für biegbare elektrische und/oder fluidische Leitungen, mit mindestens einem einen variierbaren Längsverlauf aufweisenden Leitungsführungsstrang, der in Längsrichtung von mindestens einem Leitungs-Aufnahmekanal durchzogen ist.

Maschinen und maschinelle Anlagen sind häufig mit sich linear verlagernden Komponenten ausgestattet, die mit elektrischer Energie und/oder mit fluidischen Medien, letzteres beispielsweise Druckluft oder Hydrauliköl, zu versorgen sind. Für die Energie- bzw. Mediumführung werden biegbare elektrische und/oder fluidische Leitungen eingesetzt, die die Bewegung der zu versorgenden Komponente mitmachen können. Bei den fluidischen Leitungen handelt es sich beispielsweise um biegbare Druckluft- oder Hydraulikschläuche, während die elektrischen Leitungen in der Regel als ein- oder mehradrige biegbare Kabel ausgeführt sind. Zum Schutz der Leitungen vor Beschädigungen können die Maschinen bzw. Anlagen mit einer Leitungsführungseinrichtung ausgestattet sein, die einen die Leitungen schützend umgebenden Leitungsführungsstrang aufweisen, sodass er in der Lage ist, seine momentane Gestalt an die Relativposition der zugeordneten Komponenten der Maschine bzw. Anlage anzupassen.

Eine in der DE 20 2004 009 795 U bekannte Leitungsführungseinrichtung enthält einen kettenartig ausgebildeten Leitungsführungsstrang, der aus einer Vielzahl gelenkig miteinander verbundener Strangelemente besteht, sodass innerhalb einer Ebene variable Verlaufsänderungen möglich sind. Um in der Verlaufsebene eine gewünschte Stabilität zu gewährleisten, enthält die bekannte Leitungsführungseinrichtung außerdem eine schienenartige Führungseinrichtung, auf der sich der Leitungsführungsstrang abwälzen kann. Innerhalb des Leitungsführungsstranges befindet sich ein durchgehender Leitungs-Aufnahmekanal, in dem die zu führenden Leitungen gemeinsam untergebracht sind.

Ein Nachteil der bekannten Leitungsführungseinrichtung sind die relativ hohen Herstellungskosten, die unter anderem durch den aus vielen Einzelteilen bestehenden Leitungsführungsstrang bedingt sind. Nach der Herstellung der einzelnen Teile müssen diese aufwändig zusammengesetzt werden.

Eine Aufgabe der vorliegenden Erfindung besteht somit darin, eine Leitungsführungseinrichtung zu schaffen, die sich einfacher und kostengünstiger herstellen lässt.

Zur Lösung dieser Aufgabe ist der Leitungsführungsstrang von einem aus Material mit gummielastischen Eigenschaften bestehenden flexiblen Profilteil gebildet, das über seinen Umfang verteilt mehrere jeweils einen Leitungs-Aufnahmekanal bildende hinterschnittene Längsnuten mit durch elastische Verformung des Profilteilmaterials aufweitbarem Nuthals aufweist.

Somit kann der Leitungsführungsstrang sehr einfach, beispielsweise durch Extrudieren, als einstückiges Profilteil hergestellt werden, wobei unterschiedliche Stranglängen durch Zuschneiden aus Meterwarenmaterial erhalten werden können.
Als Leitungs-Aufnahmekanäle fungieren in dem Profilteil ausgebildete Längsnuten, die in angemessener, bei Bedarf spezifisch auf den jeweiligen Anwendungsfall zugeschnittener Verteilung und Anzahl vorgesehen werden können. Die Realisierbarkeit mehrerer voneinander unabhängiger Leitungs-Aufnahmekanäle innerhalb ein und desselben Profilteils gestattet es bei Bedarf überdies, mehrere Leitungen getrennt voneinander zu verlegen, was beispielsweise die Möglichkeit eröffnet, fluidische und elektrische Leitungen voneinander zu trennen und somit insbesondere die Gefahr von auf die Beschädigung einer elektrischen Leitung zurückzuführenden Kurzschlüssen zu verringern.

Da das flexible Profilteil von Hause aus ein relativ geringes spezifisches Gewicht aufweist, wird man überdies in Verbindung mit der inhärenten gewissen Eigenstabilität in vielen Fällen auf eine gesonderte externe Führungseinrichtung verzichten können. Dadurch werden die aufzuwendenden Kosten um einen weiteren nicht unerheblichen Faktor gemindert.

Ein weiterer Vorteil besteht in der einfachen Montage- und Demontagemöglichkeit für die zu führenden Leitungen. Diese müssen nicht aufwändig durch einen ringsum geschlossenen Kanal hindurchgefädelt werden, sondern lassen sich leicht von der Seite her durch den elastisch aufweitbaren Nuthals der betreffenden Längsnut hindurchdrücken.

Vorteilhafte Weiterbildungen der Erfindung gehen aus den Unteransprüchen hervor.

Zweckmäßigerweise besteht der Leitungsführungsstrang aus einem weichen Schaumstoffmaterial. Als besonders kostengünstige Lösung hat sich eine Realisierung aus sogenanntem Moosgummi herausgestellt.

Man kann die Leitungs-Aufnahmekanäle in ihrer Querschnittsform so an die aufzunehmenden Leitungen anpassen, dass in jedem Leitungs-Aufnahmekanal genau eine Leitung aufgenommen wird, die von der Kanalwandung satt umschlossen und mithin abgestützt wird.

Das Einführen einer Leitung in den Leitungs-Aufnahmekanal gestaltet sich besonders einfach, wenn der Nuthals der betreffenden Längsnut einen sich zur Außenfläche des Leitungsführungsstranges erweiternden Einführabschnitt aufweist.

Als besonders vorteilhafte Geometrie für den Leitungsführungsstrang hat sich ein rechteckiger Querschnitt herausgestellt. Dabei können zur Leitungsführung dienende Längsnuten an lediglich einer oder an mehreren der vier Außenflächen des Profilteils vorgesehen sein.

Zur ortsfesten Fixierung des Leitungsführungsstranges enthält die Leitungsführungseinrichtung zweckmäßigerweise ein oder mehrere Befestigungselemente. Das Befestigungselement hält zum einen den Leitungsführungsstrang fest und kann zum anderen direkt oder indirekt an einer Tragstruktur befestigt werden, bei der es sich in der Regel um einen Bestandteil einer von zwei relativ zueinander bewegbaren Komponenten handelt.

Zweckmäßigerweise sind mehrere Befestigungselemente vorhanden, die an in Längsrichtung beabstandeten Stellen am gleichen Leitungsführungsstrang angreifen. Insbesondere können jedem Leitungsführungsstrang zwei Befestigungselemente zugeordnet sein, die jeweils zur Fixierung eines der beiden Endabschnitte des Leitungsführungsstranges dienen.

Das Befestigungselement, das bevorzugt in kostengünstiger Weise aus Kunststoffmaterial besteht, ist zweckmäßigerweise rahmenartig ausgebildet und umschließt den zu fixierenden Leitungsführungsstrang an der vorgesehenen Befestigungsstelle. Der Innenquerschnitt des Befestigungselementes und der Außenquerschnitt des Leitungsführungsstranges sind dabei zweckmäßigerweise so aufeinander abgestimmt, dass der Leitungsführungsstrang unter zumindest geringer Vorspannung umschlossen ist und dadurch zuverlässig festgehalten wird.

Die Montage eines Befestigungselementes am Leitungsführungsstrang wird vereinfacht, wenn das Befestigungselement eine im Querschnitt U-förmige Basis und einen der Basisöffnung zugeordneten Deckel aufweist. Bei entferntem Deckel kann der Leitungsführungsstrang in der Basis platziert werden. Durch anschließendes Schließen des Deckels ergibt sich die den Leitungsführungsstrang umschließende Rahmenstruktur.

Zweckmäßigerweise ist der Deckel an der Basis schwenkgelagert und kann zum Öffnen und Schließen des Befestigungselementes relativ zur Basis verschwenkt werden. Die Lagerstelle kann insbesondere mittels eines einstückigen Festkörpergelenkes realisiert werden.

In allen Fällen empfiehlt es sich, Rastverbindungsmittel zur Fixierung des geschlossenen Deckels an der Basis vorzusehen.

Ein weiterer Vorteil stellt sich ein, wenn die Befestigungselemente mit zueinander komplementären Kupplungsmitteln ausgestattet sind, die es ermöglichen, mehrere Befestigungselemente, insbesondere lösbar, zu einer Baugruppe zusammenzufassen. Dadurch werden insbesondere dann die Befestigungsmaßnahmen vereinfacht, wenn die Leitungsführungseinrichtung über mehrere Leitungsführungsstränge verfügt.

Der erfindungsgemäße Leitungsführungsstrang eignet sich nicht nur für dynamische Anwendungen, sondern auch für solche statischer Art. Selbst wenn also der Leitungsführungsstrang während seines Einsatzes seine Gestalt konstant beibehält, erleichtert seine Flexibilität die Herstellung und die Verlegearbeiten.

Nachfolgend wird die Erfindung anhand der beiliegenden Zeichnungen näher erläutert. In dieser zeigen:
- Figur 1: ein mit einer bevorzugten Bauform der erfindungsgemäßen Leitungsführungseinrichtung ausgestattetes maschinelles Gerät in perspektivischer Darstellung,
- Figur 2: die Anordnung aus Figur 1 in einer Seitenansicht mit Blickrichtung gemäß Pfeil II,
- Figur 3: einen Querschnitt durch die Anordnung aus Figur 1 im Bereich eines Leitungsführungsstranges gemäß Schnittlinie III-III,
- Figur 4: das in Figur 1 strichpunktiert bei IV umrahmte Befestigungselement in einer vergrößerten Einzeldarstellung in einer schrägen Unteransicht,
- Figur 5: das Befestigungselement aus Figur 4 in einer schrägen Draufsicht,
- Figur 6: einen Querschnitt durch die in Figur 1 gezeigte Leitungsführungseinrichtung gemäß Schnittlinie VI-VI in einer Ausschnittsdarstellung,
- Figur 7: den in Figur 1 strichpunktiert umrahmten Bereich. VII in einer Einzeldarstellung und beschränkt auf ein Befestigungselement mit daran fixiertem Leitungsführungsstrang, und
- Figur 8: eine optionale seitliche Kopplungsmöglichkeit mehrerer Befestigungselemente.

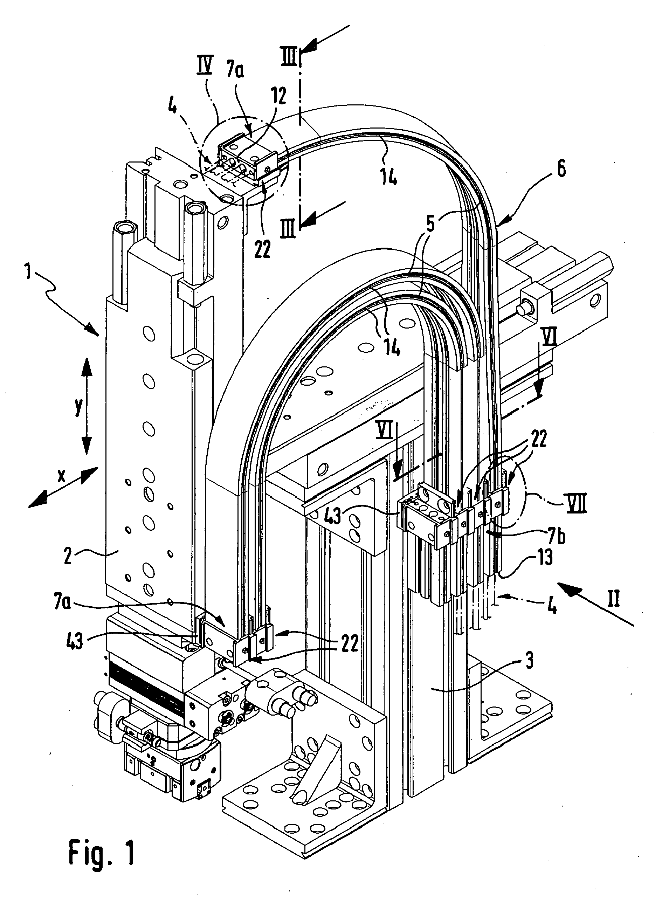

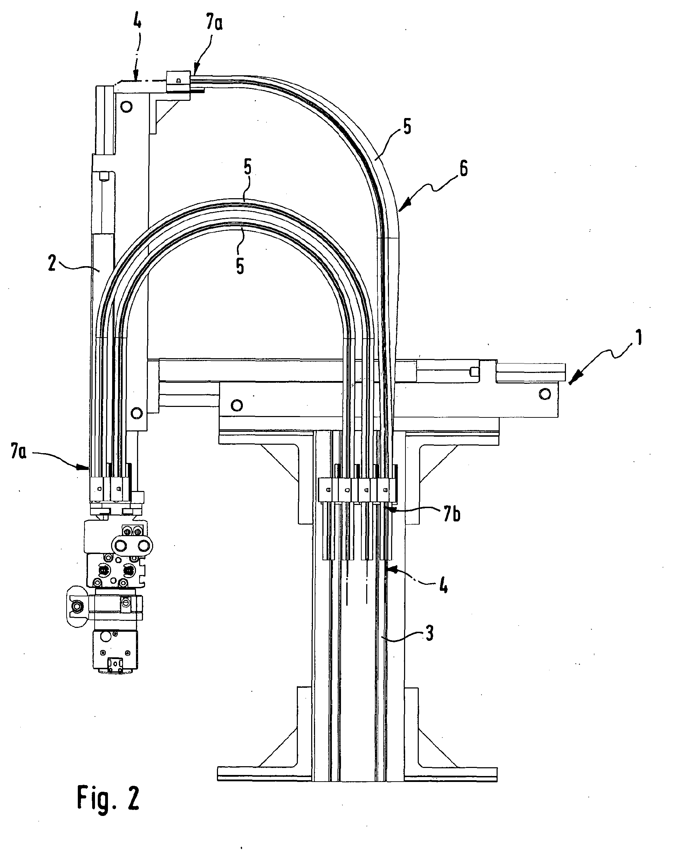

Die Figuren 1 und 2 zeigen ein unter Verwendung eines fluidischen Mediums und elektrischer Energie betriebenes maschinelles Gerät 1 in einer exemplarischen Ausgestaltung. Dieses Gerät 1 dient zur Handhabung von Gegenständen und insbesondere zum Umsetzen solcher Gegenstände zwischen zwei Positionen während eines Fertigungs- oder Montageprozesses.

Das Gerät 1 besitzt unter anderem eine erste Gerätekomponente 2, die während des Betriebes relativ zu einer zweiten Gerätekomponente 3 bewegbar ist. Beim Ausführungsbeispiel kann die erste Gerätekomponente 2 in einer x-y-Ebene relativ zur zweiten Gerätekomponente 3 verlagert werden.

Die erste Gerätekomponente 2 wird über elektrische und fluidische Leitungen 4 mit elektrischer Energie und einem fluidischen Druckmedium, letzteres insbesondere Druckluft, versorgt. Diese Leitungen 4 sind in den einzelnen Zeichnungsfiguren teilweise nur strichpunktiert angedeutet. Soweit es sich um elektrische Leitungen 4a handelt, sind diese insbesondere in Gestalt ein- oder mehradriger Kabel ausgeführt. Die fluidischen Leitungen 4b sind von Schläuchen gebildet. In allen Fällen sind die Leitungen 4 flexibel und leicht biegbar.

Die Leitungen 4 erstrecken sich zwischen den beiden relativ zueinander bewegbaren Gerätekomponenten 2, 3. Damit sich hierbei ein geordneter Leitungsführungsverlauf einstellt und die Leitungen 4 insbesondere vor Beschädigungen durch sich bewegende Teile geschützt sind, sind die Leitungen 4 in einem oder mehreren Leitungsführungssträngen 5 verlegt, die Bestandteil einer insgesamt mit Bezugsziffer 6 bezeichneten Leitungsführungseinrichtung sind, mit der das maschinelle Gerät 1 ausgestattet ist. Ein und dasselbe maschinelle Gerät 1 kann über lediglich einen oder über gleichzeitig mehrere Leitungsführungsstränge 5 verfügen.

Jeder Leitungsführungsstrang 5 ist an zwei zueinander beabstandeten Stellen - im Folgenden als erste und zweite Befestigungsstelle 7a, 7b bezeichnet - ortsfest an jeweils einer der beiden Gerätekomponenten 2, 3 fixiert. Diese Befestigungsstellen 7a, 7b befinden sich insbesondere an den einander entgegengesetzten Endabschnitten eines jeweiligen Leitungsführungsstranges 5.

Die Leitungsführungsstränge 5 sind jeweils einstückig von einem aus Material mit gummielastischen Eigenschaften bestehenden flexiblen Profilteil gebildet. Auf Grund seiner Flexibilität kann der Leitungsführungsstrang 5 leicht abgebogen werden, sodass sich sein Längsverlauf ändert. Eine solche Variation des Längsverlaufes stellt sich automatisch bei der Relativbewegung zwischen den beiden Gerätekomponenten 2, 3 ein, weil sich hierbei auch die Relativlage zwischen den ersten und zweiten Befestigungsstellen 7a, 7b eines jeweiligen Leitungsführungsstranges 5 ändert.

Beim Ausführungsbeispiel sind die Leitungsführungsstränge 5 so verlegt, dass sie abschnittsweise einen linearen und einen gekrümmten Verlauf besitzen. Bei der Relativbewegung der Befestigungsstellen 7a, 7b verändert sich die Länge der linearen Abschnitte bei gleichzeitiger Lageänderung des gekrümmten Abschnittes. Auf Grund der hohen Flexibilität findet die Gestaltänderung im Rahmen eines harmonischen Bewegungsablaufes statt.

Die Leitungen 4 verlaufen in Leitungs-Aufnahmekanälen 8, von denen jeder Leitungsführungsstrang 5 mehrere aufweist und die den betreffenden Leitungsführungsstrang 5 parallel zu seiner Längsachse in Längsrichtung durchsetzen, wobei sie an den beiden einander entgegengesetzten Stirnflächen eines jeweiligen Leitungsführungsstranges 5 offen ausmünden. Die in den Leitungs-Aufnahmekanälen 8 verlaufenden Leitungen 4 treten im Bereich der stirnseitigen Mündungen aus den Leitungs-Aufnahmekanälen 8 aus und verlaufen von dort zu nicht näher dargestellten zugehörigen Anschlussstellen der betreffenden Gerätekomponenten 2, 3. Auf Grund ihrer Flexibilität können die Leitungen 4 die Gestaltänderung der elastischen Leitungsführungsstränge 5 ohne weiteres mitmachen.

Die Leitungs-Aufnahmekanäle 8 sind von hinterschnittenen Längsnuten 14 gebildet, die über den Umfang eines jeweiligen Leitungsführungsstranges 5 verteilt in diesem ausgebildet sind. Genauer gesagt ist beim Ausführungsbeispiel der jeweilige Leitungs-Aufnahmekanal 8 von dem bezüglich dem zugeordneten Nuthals 15 tiefer im Leitungsführungsstrang 5 liegenden Innenabschnitt 16 der betreffenden Längsnut 14 gebildet, dessen Durchmesser größer ist als die Breite des Nuthalses 15 an dessen engster Stelle.

Die Querabmessungen der in den Leitungs-Aufnahmekanälen 8 angeordneten Leitungen 4 sind größer als die Breite des zugeordneten Nuthalses 15. Das Einsetzen in einen Leitungs-Aufnahmekanal 8 geschieht durch den Nuthals 15 hindurch, der dabei auf Grund elastischer Verformung des Profilteilmaterials kurzzeitig aufgeweitet wird. In entsprechender Weise kann eine Leitung 4 bei Bedarf auch ohne weiteres wieder durch den Nuthals 15 hindurch aus einem Leitungs-Aufnahmekanal 8 seitwärts herausgezogen werden.

In Anpassung an die übliche kreisförmige Außenkontur fluidischer und elektrischer Leitungen sind die Innenabschnitte 16 der Längsnuten 14 beim Ausführungsbeispiel ebenfalls kreisförmig konturiert. Als ideal wird es angesehen, wenn in jedem Leitungs-Aufnahmekanal 8 nur eine einzige Leitung 4 verläuft, wobei der Querschnitt des Innenabschnittes 16 so auf den Leitungsquerschnitt abgestimmt ist, dass der Innenabschnitt 16 mit seiner Wandung - abgesehen von dem durch den Nuthals 15 bedingten Spalt - ringsum am Außenumfang der darin enthaltenen Leitung 4 anliegt. Die Querschnittsabmessungen können insbesondere so gewählt sein, dass die eingesetzte Leitung 4 unter Vorspannung von dem den Leitungsführungsstrang 5 bildenden Profilteil umspannt wird.

Damit sich eine Leitung 4, deren Durchmesser größer ist als die Nuthalsbreite, besonders leicht durch den zugeordneten Nuthals 15 hindurchdrücken lässt, münden beim Ausführungsbeispiel die Nuthälse 15 jeweils mit einem sich erweiternden Einführabschnitt 17 zur Außenfläche des Leitungsführungsstranges 5 aus. Im Querschnitt gesehen kann der Einführungsabschnitt 17 sich in Richtung zum Innenabschnitt 16 hin trichterartig verjüngend ausgebildet sein.

Da die Leitungs-Aufnahmekanäle 8 den Leitungsführungsstrang 5 über seine gesamte Länge hinweg durchsetzen, kann das Profilteil sehr kostengünstig durch Extrudieren von Kautschuk oder von Kunststoffmaterial hergestellt werden. Es kann insbesondere eine Fertigung in Endlosware oder Meterware vorgesehen sein, wobei man das erhaltene Strangmaterial dann von Fall zu Fall auf die gewünschte Stranglänge zuschneidet.

Als Material für das den Leitungsführungsstrang 5 bildende Profilteil bietet sich besonders Schaumstoff an. Zweckmäßigerweise wird ein Weichschaumstoffmaterial verwendet, insbesondere ein Polyurethan-Weichschaum. Beim Ausführungsbeispiel bestehen die Leitungsführungsstränge 5 aus Moosgummi.

Die Verteilung der Längsnuten 14 entlang des Umfanges des Leitungsführungsstranges 5 orientiert sich an den jeweiligen Bedürfnissen und berücksichtigt insbesondere auch die Querschnittsabmessungen der benötigten Leitungs-Aufnahmekanäle 8. Als besonders zweckmäßig hat sich erwiesen, wenn das den Leitungsführungsstrang 5 bildende Profilteil wie beim Ausführungsbeispiel einen rechteckigen Querschnitt aufweist, wobei dann in mehreren der sich ergebenden vier Außenflächen des Profilteils eine oder mehrere Längsnuten 14 ausgebildet sein können.

Die beim Ausführungsbeispiel vorhandene rechteckige Profilierung resultiert in zwei einander entgegengesetzten großflächigen Außenflächen 18a und in zwei schmalen Außenflächen 18b. Hier bietet es sich an, pro schmaler Außenfläche 18b, insbesondere breitenmittig, eine Längsnut 14 vorzusehen, deren Innenabschnitt 16 in Anpassung an den meist relativ kleinen Durchmesser elektrischer Leitungen 4b ebenfalls relativ klein ausgebildet ist. Darüber hinaus sind beim Ausführungsbeispiel zwei weitere Längsnuten 14 in einer der großflächigen Außenflächen 18a vorgesehen, mit Abstand parallel nebeneinander verlaufend, wobei deren Innenabschnitt 16 zur Aufnahme fluidischer Leitungen 4a über einen größeren Querschnitt verfügt. Die Mittelachsen sämtlicher Innenabschnitte 16 können in einer zu den großflächigen Außenflächen 18a parallelen Profilteilebene verlaufen.

Die beim Ausführungsbeispiel vorhandene Anzahl und Verteilung von Leitungs-Aufnahmekanälen 8 wird für viele Anwendungen als besonders zweckmäßig angesehen, weil sie es beispielsweise ermöglicht, die zur Betätigung und Ansteuerung eines fluidbetätigten Antriebes sinnvollen Leitungen in einem gemeinsamen Leitungsführungsstrang 5 zusammenzufassen. Es versteht sich jedoch, dass auch andere Konfigurationen möglich sind.

Die Leitungsführungsstränge 5 werden zweckmäßigerweise als lineares Strangmaterial bereitgestellt, das für den jeweiligen Anwendungsfall unter elastischer Verformung reversibel in die gewünschte Gestalt gebogen werden kann.

Für die bezüglich der zugeordneten Gerätekomponente 2, 3 ortsfeste Fixierung der Leitungsführungsstränge 5 sind vorteilhaft ausgestaltete, insbesondere aus Kunststoffmaterial bestehende Befestigungselemente 22 vorgesehen. Jeder Leitungsführungsstrang 5 ist an jeder seiner beiden Befestigungsstellen 7a, 7b mit einem solchen Befestigungselement 2 ausgestattet, das andererseits direkt oder unter Zwischenschaltung von Adaptermitteln 43 an der als Tragstruktur fungierenden zugeordneten Gerätekomponente 2, 3 befestigt ist. An jedem Leitungsführungsstrang 5 greifen mithin beim Ausführungsbeispiel mehrere Befestigungselemente 22 an in Längsrichtung beabstandeten Befestigungsstellen 7a, 7b an.

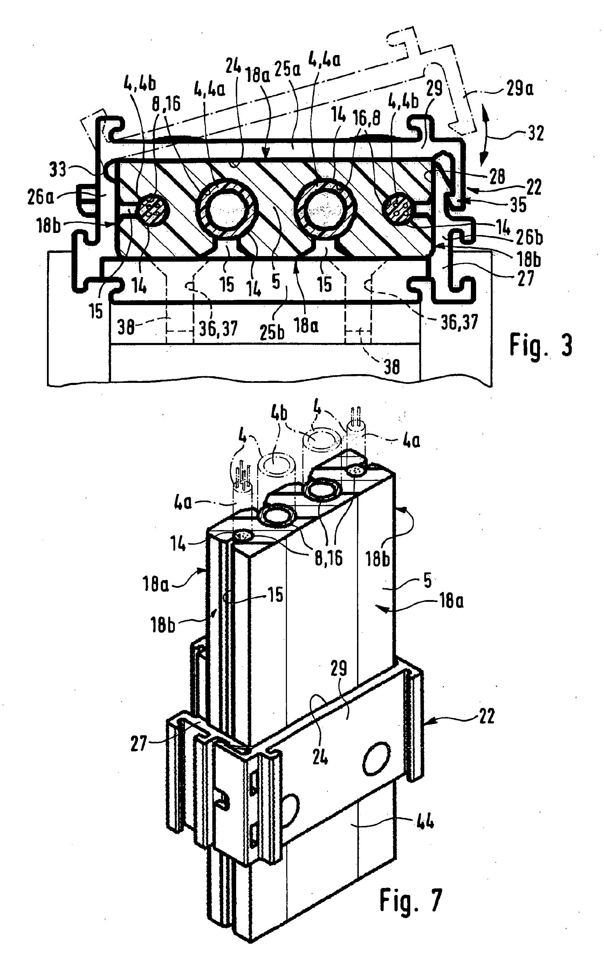

Wie vor allem aus Figuren 3 bis 5 und 7 gut ersichtlich ist, die jeweils ein Befestigungselement 22 aus verschiedenen Blickrichtungen zeigen, sind die Befestigungselemente 22 bevorzugt rahmenartig ausgebildet. Ihre Rahmenkontur entspricht der Außenkontur der Leitungsführungseinrichtung 6 und ist mithin ebenfalls im Wesentlichen rechteckig. Der Leitungsführungsstrang 5 wird an seinen Befestigungsstellen 7, 8 von dem dort platzierten rahmenartigen Befestigungselement 2 ringsum umschlossen. Dabei wird der das Befestigungselement 5 durchsetzende Längenabschnitt des Leitungsführungsstranges 5 vom Befestigungselement 22 zweckmäßigerweise mit einer gewissen radialen Vorspannung beaufschlagt, sodass sich ein Kraftschluss ergibt, durch den sich eine in der Längsrichtung des Leitungsführungsstranges 5 unverschiebbare feste Verbindung zwischen dem Leitungsführungsstrang 5 und dem jeweiligen Befestigungselement 22 einstellt.

In der aus der Zeichnung ersichtlichen zweckmäßigen Bauform besitzt das Befestigungselement 22 einen von der Rahmenstruktur definierten Klemmdurchgang 24, der vom Leitungsführungsstrang 5 durchsetzt ist. Zur Definition dieses Klemmdurchganges 24 verfügt das Befestigungselement 22 über zwei einander entgegengesetzte großflächige Wände, die zur besseren Unterscheidung als obere und untere Wände 25a, 25b bezeichnet seien, sowie zwei rechtwinkelig dazu verlaufende schmale Seitenwände 26a, 26b. Der durch diese vier Wände begrenzte Klemmdurchgang 24 besitzt eine rechteckige Querschnittskontur, die geringfügig kleiner ausfällt als der Außenquerschnitt des Leitungsführungsstranges 5, sodass dessen im Klemmdurchgang 24 angeordneter Längenabschnitt durch die vier vorgenannten Wände unter Vorspannung klemmend beaufschlagt ist.

Beim Ausführungsbeispiel bildet die untere Wand 25b mit den beiden schmalen Seitenwänden 26a, 26b eine einstückige, im Querschnitt U-förmige Basis 27 mit von der unteren Wand 25a wegweisender Basisöffnung 28. Die obere Wand 25a repräsentiert einen die Basisöffnung 28 verschließenden und dadurch die Rahmenstruktur komplettierenden Deckel 29. Dieser Deckel 29 ist an einer seiner Längsseiten unter Bildung eines Festkörpergelenkes 3.3 einstückig mit der dortigen schmalen Seitenwand 26a verbunden. Das Festkörpergelenk 33 ist durch einen bezüglich den Nachbarbereichen in seiner Materialstärke reduzierten Materialsteg definiert, durch den eine zur Längsachse 34 des Befestigungselementes 22 parallele Schwenkachse vorgegeben wird, um die der Deckel 29 relativ zur Basis 27 gemäß Doppelpfeil 32 verschwenkbar ist, um die Basisöffnung 28 nach Wahl zu verschließen oder freizugeben. In Figur 3 ist strichpunktiert bei 29a eine bei dem Schwenkvorgang des Deckels eingenommene Zwischenstellung angedeutet.

Um ein Befestigungselement 22 am Leitungsführungsstrang 5 anzubringen, wird der Deckel 29 zur Freigabe der Basisöffnung 28 aufgeschwenkt, anschließend der Leitungsführungsstrang 5 in die U-förmige Basis 27 eingelegt und anschließend der Deckel 29 wieder geschlossen.

Zur Sicherung der Schließstellung ist die dem Festkörpergelenk 33 entgegengesetzte schmale Seitenwand 26b und der zugeordnete Endabschnitt des Deckels 29 mit zueinander komplementären Rastverbindungsmitteln 35 ausgestattet. Diese bestehen beim Ausführungsbeispiel aus einander hintergreifenden hakenartigen Vorsprüngen. Die Rastverbindung kann leicht durch Ausbiegen des die deckelseitigen Rastverbindungsmittel 35 tragenden Deckelendabschnittes gelöst werden. Die Rastverbindung selbst stellt sich automatisch ein, wenn der Deckel 29 in die Schließstellung gedrückt wird.

Bei einer nicht dargestellten alternativen Bauform ist der Deckel 29 ein bezüglich der Basis 27 getrenntes Bauteil, das zum Einsetzen des Leitungsführungsstranges 5 vorübergehend von der Basis 27 entfernt wird. Des Weiteren besteht die prinzipielle Möglichkeit, an Stelle des Festkörpergelenkes 33 auch eine konventionelle Scharnierlösung in Verbindung mit einem bezüglich der Basis 27 gesonderten Deckel 29 vorzusehen.

Um das Befestigungselement 22 an der zugeordneten Gerätekomponente 2, 3 bzw. einer sonstigen Tragstruktur befestigen zu können, ist es mit geeigneten Befestigungsmitteln 36 ausgestattet. Diese umfassen beim Ausführungsbeispiel mehrere die untere Wand 25b durchsetzende Befestigungslöcher 37, die das Hindurchstecken von lediglich in Figur 3 angedeuteten Befestigungsschrauben 38 ermöglichen, über die das Befestigungselement 22 an der Tragstruktur 2, 3 festgeschraubt werden kann.

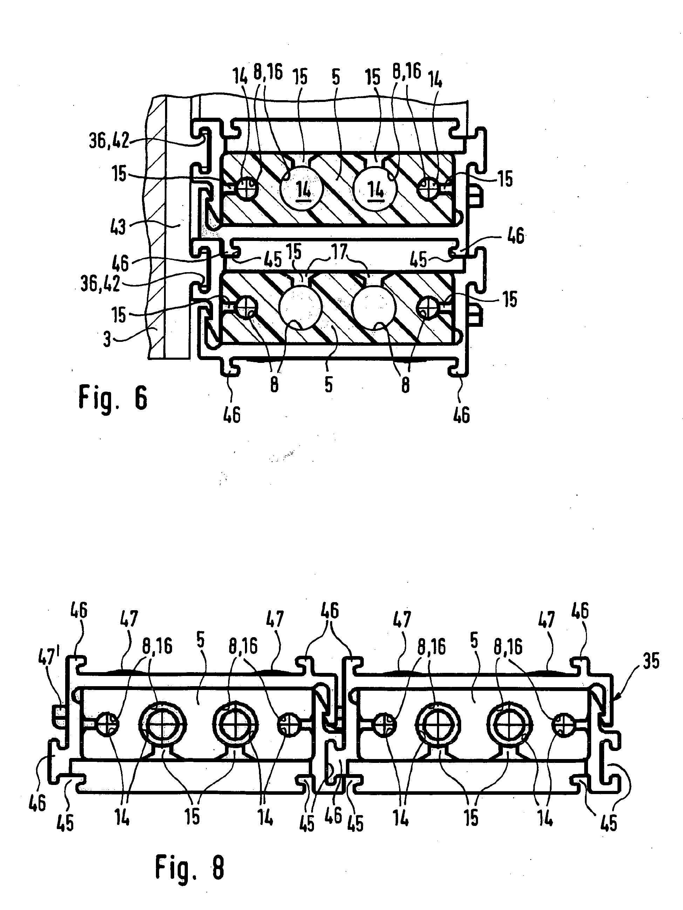

Als weiteres Befestigungsmittel 36 kann außen an einer der schmalen Seitenwände 26b eine längsverlaufende Befestigungsnut 42 vorgesehen sein, die in Verbindung mit Nutensteinen oder einem aus Figuren 1 und 6 ersichtlichen Adapter 43 zur direkten oder indirekten Befestigung an der Tragstruktur 3 nutzbar ist.

Damit sich das Befestigungselement 22 sicher an der zugeordneten Tragstruktur abstützen kann, besitzt die mit den Befestigungslöchern 37 ausgestattete untere Wand 25b in Richtung der Längsachse 34 zweckmäßigerweise eine größere Länge als die sich anschließenden schmalen Seitenwände 26a, 26b und die als Deckel 29 fungierende obere Wand 25. Sie ragt insbesondere auf lediglich einer Axialseite über diese kürzeren Wände hinaus.

Um eine zusätzliche oder alternative Befestigung zu ermöglichen, kann der Leitungsführungsstrang 5 an seiner Außenfläche mit aus Figur 7 exemplarisch ersichtlichen Haftmitteln 44 versehen sein, wobei insbesondere mindestens ein Selbstklebestreifen in Frage kommt. Dieser besitzt eine Schutzfolie, die sich zum Freilegen einer Haftfläche abziehen lässt. Der Klebestreifen kann sich insbesondere über die gesamte Länge des Leitungsführungsstranges 5 erstrecken. Beim Ausführungsbeispiel befindet er sich an derjenigen der beiden großflächigen Außenflächen 18a, die keine Längsnut 14 aufweist.

Der Einsatz der Haftmittel 44 unter gleichzeitigem Verzicht auf Befestigungselemente 22 ist insbesondere dann sinnvoll, wenn der Leitungsführungsstrang 5 für statische Anwendungen eingesetzt wird, bei denen er seine Gestalt unverändert beibehält.

Selbst wenn der Leitungsführungsstrang 5 nicht ununterbrochen durchgängig mit Haftmitteln 44 versehen ist, empfiehlt sich gleichwohl eine Verteilung der Haftmittel 44 über die gesamte Stranglänge. Es könnten in diesem Fall zueinander beabstandete Haftzonen vorgesehen sein.

Die Befestigungselemente 22 sind zweckmäßigerweise mit zueinander komplementären Kopplungsmitteln 45, 46 ausgestattet, die es ermöglichen, zwei oder mehr Befestigungselemente 22 zu einer Baugruppe zusammenzufassen. Diese Kopplungsmittel 45, 46 bestehen beim Ausführungsbeispiel aus zueinander komplementären, sich durchgängig in Längsrichtung 34 der Befestigungselemente 22 erstreckenden nutartigen Vertiefungen 45 und rippenartigen Vorsprüngen 46. Diese lassen sich in Längsrichtung ineinanderschieben, sodass sie sich in Querrichtung formschlüssig hintergreifen.

Indem jedes der Befestigungselemente 22 mit den zueinander komplementären Kopplungsmitteln 45, 46 ausgestattet ist und zweckmäßigerweise ein identischer Aufbau sämtlicher Befestigungselemente 22 vorliegt, können die Befestigungselemente 22 beliebig miteinander kombiniert werden, wobei jeweils am einen Befestigungselement 22 vorgesehene Kopplungsmittel 45 der einen Art mit den dazu komplementären Kopplungsmitteln 46 des anderen Befestigungselementes 22 koppelbar sind.

Beim Ausführungsbeispiel sind außen an den beiden großflächigen oberen und unteren Wänden 25a, 25b zueinander komplementäre Kopplungsmittel 45, 46 vorhanden, die ein höhenmäßiges Verknüpfen mehrerer Befestigungselemente 22 ermöglichen, wie dies in Figur 7 angedeutet ist. Zusätzlich sind beim Ausführungsbeispiel aber auch außen an den beiden schmalen Seitenwänden 26a, 26b solche komplementären Kopplungsmittel 45, 46 vorhanden, die ein Verknüpfen mehrerer Befestigungselemente 22 in ihrer Breitenrichtung ermöglichen, wie dies in Figur 8 angedeutet ist. Soweit es sich bei diesen Kopplungsmitteln um eine nutartige Vertiefung handelt, kann diese gleichzeitig die Funktion der oben geschilderten Befestigungsnut 42 übernehmen.

Der Kopplungsvorgang zweier Befestigungselemente 22 besteht im aufeinander Aufschieben derselben unter gleichzeitigem Eingriff der komplementären Kopplungsmittel 45, 46. Um den gekoppelten Zustand zu sichern, sind zweckmäßigerweise Sicherungsmittel vorhanden, die die aufeinander geschobenen Befestigungselemente 22 derart aneinander fixieren, dass sie nur mit einer gewissen Kraftaufwendung wieder voneinander abgezogen werden können. Diese Sicherungsmittel bestehen beim Ausführungsbeispiel aus an der Außenfläche einstückig angeformten Sicherungserhebungen 47, die in das jeweils andere Befestigungselement 22 formschlüssig eingreifen können. Die Sicherungserhebungen 47 greifen dabei zweckmäßigerweise in in der Wandung des jeweils anderen Befestigungselementes 22 ausgebildete Verriegelungsvertiefungen oder -löcher 48 ein, wobei letztere von den schon erwähnten Befestigungslöchern 37 gebildet sein können.

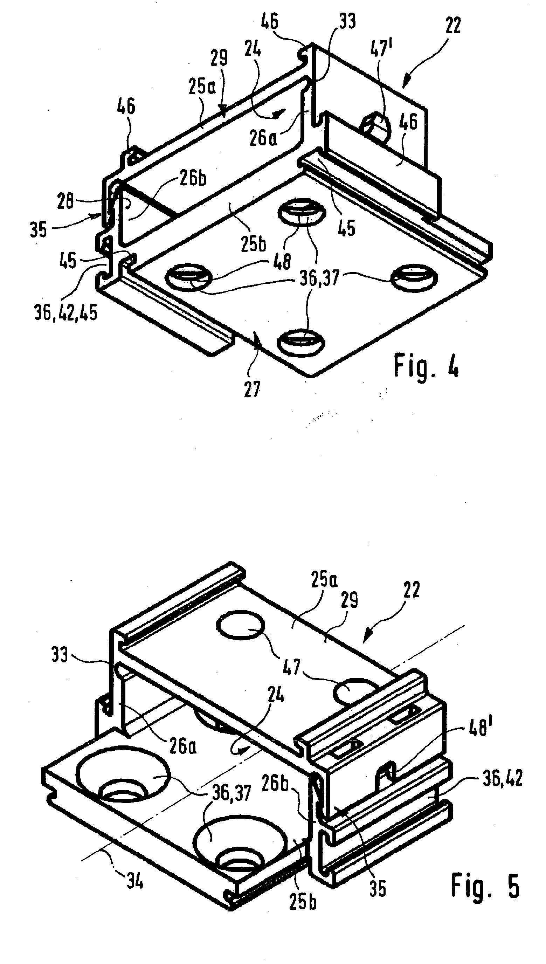

Die soeben beschriebenen Sicherungserhebungen 47 und Verriegelungsvertiefungen 48 befinden sich an der oberen und unteren Wand 25 des Befestigungselementes 22 und sind mithin bei in Höhenrichtung gestapelten Befestigungselementen 22 wirksam. In entsprechender Weise können aber auch außen an den schmalen Seitenwänden 26a, 26b zueinander komplementäre Sicherungserhebungen 47' und Verriegelungsvertiefungen 48' vorhanden sein, die eine axiale Lagesicherung bei gemäß Figur 8 in Querrichtung aneinander angesetzten Befestigungselementen 22 bewirken. Die Verriegelungsvertiefung 48' kann hierbei als Randaussparung des Deckels 29 vorgesehen sein, (siehe Figur 5), sodass sie durch Schließen und Öffnen des Deckels wahlweise in und außer Eingriff mit der zugeordneten Sicherungserhebung 47' gebracht werden kann.

## Patentansprüche

1. Leitungsführungseinrichtung für biegbare elektrische und/oder fluidische Leitungen, mit mindestens einem einen variierbaren Längsverlauf aufweisenden Leitungsführungsstrang (5), der in Längsrichtung von mindestens einem Leitungs-Aufnahmekanal (8) durchzogen ist, **dadurch gekennzeichnet, dass** der Leitungsführungsstrang (5) von einem aus Material mit gummielastischen Eigenschaften bestehenden flexiblen Profilteil gebildet ist, das über seinen Umfang verteilt mehrere jeweils einen Leitungs-Aufnahmekanal (8) bildende hinterschnittene Längsnuten mit durch elastische Verformung des Profilteilmaterials aufweitbarem Nuthals (15) aufweist.

2. Leitungsführungseinrichtung nach Anspruch 1, **dadurch gekennzeichnet, dass** der Leitungsführungsstrang (5) aus einem Schaumstoffmaterial besteht, insbesondere PUR-Weichschaummaterial.

3. Leitungsführungseinrichtung nach Anspruch 1 oder 2, **dadurch gekennzeichnet, dass** der Leitungsführungsstrang (5) aus Moosgummi besteht.

4. Leitungsführungseinrichtung nach einem der Ansprüche 1 bis 3, **dadurch gekennzeichnet, dass** mindestens eine und zweckmäßigerweise jede der Längsnuten (14) einen an den Nuthals (15) anschließenden, im Wesentlichen kreisförmig konturierten Innenabschnitt (16) mit bezüglich der engsten Nuthalsbreite größerem Durchmesser aufweist.

5. Leitungsführungseinrichtung nach Anspruch 4, **dadurch gekennzeichnet, dass** in mindestens einem Leitungs-Aufnahmekanal (8) genau eine Leitung (4) aufgenommen ist, an der die Wandung des Innenabschnittes (16) anliegt.

6. Leitungsführungseinrichtung nach einem der Ansprüche 1 bis 5, **dadurch gekennzeichnet, dass** der Nuthals (15) mit einem sich erweiternden Einführabschnitt (17) zur Außenfläche des Leitungsführungsstranges (5) ausmündet.

7. Leitungsführungseinrichtung nach einem der Ansprüche 1 bis 6, **dadurch gekennzeichnet, dass** das den Leitungsführungsstrang (5) bildenden Profilteil einen rechteckigen Querschnitt aufweist.

8. Leitungsführungseinrichtung nach Anspruch 7, **dadurch gekennzeichnet, dass** in mehreren der vier Außenflächen des Profilteils je mindestens eine einen Leitungs-Aufnahmekanal (8) bildende Längsnut (14) vorhanden ist.

9. Leitungsführungseinrichtung nach einem der Ansprüche 1 bis 8, **gekennzeichnet durch** mindestens ein zur ortsfesten Fixierung des mindestens einen Leitungsführungsstranges (5) bezüglich einer Tragstruktur (2, 3) vorgesehenes Befestigungselement (22) .

10. Leitungsführungseinrichtung nach Anspruch 9, **gekennzeichnet durch** mehrere an in Längsrichtung beabstandeten Stellen am gleichen Leitungsführungsstrang (5) angreifende Befestigungselemente (22).

11. Leitungsführungseinrichtung nach Anspruch 9 oder 10, **dadurch gekennzeichnet, dass** mindestens ein Befestigungselement (22) aus Kunststoffmaterial besteht.

12. Leitungsführungseinrichtung nach einem der Ansprüche 9 bis 11, **dadurch gekennzeichnet, dass** mindestens ein Befestigungselement (22) rahmenartig ausgebildet ist und den zu fixierenden Leitungsführungsstrang (5), zweckmäßigerweise unter Vorspannung, umschließt.

13. Leitungsführungseinrichtung nach Anspruch 12, **dadurch gekennzeichnet, dass** das rahmenartige Befestigungselement (22) eine im Querschnitt U-förmige Basis (27) und einen der Basisöffnung (28) zugeordneten Deckel (29) aufweist.

14. Leitungsführungseinrichtung nach Anspruch 13, **gekennzeichnet durch** Rastverbindungsmittel (35) zur lösbaren Verriegelung des Deckels (29) bezüglich der Basis (27) in der die Basisöffnung (28) verschließenden Schließstellung.

15. Leitungsführungseinrichtung nach Anspruch 13 oder 14, **dadurch gekennzeichnet, dass** der Deckel (29) an der Basis (27) verschwenkbar befestigt ist, insbesondere einstückig über mindestens ein Festkörpergelenk (33).

16. Leitungsführungseinrichtung nach einem der Ansprüche 9 bis 15, **dadurch gekennzeichnet, dass** mehrere Befestigungselemente (22) vorhanden sind, die über zueinander komplementäre Kopplungsmittel (45, 46) verfügen, die ein Zusammenkoppeln mehrerer Befestigungselemente (22) zu einer Baugruppe ermöglichen.

17. Leitungsführungseinrichtung nach Anspruch 16, **dadurch gekennzeichnet, dass** die Kopplungsmittel (45, 46) zueinander komplementäre rippenartige Vorsprünge und nutartige Vertiefungen enthalten, die sich im gekoppelten Zustand quer zu ihrer Längsrichtung formschlüssig hintergreifen.

18. Leitungsführungseinrichtung nach Anspruch 17, **dadurch gekennzeichnet, dass** die Kopplungsmittel (45, 46) ausgebildet sind, um durch in Längsrichtung erfolgendes Ineinanderschieben miteinander in Eingriff gebracht werden zu können.

19. Leitungsführungseinrichtung nach Anspruch 18, **dadurch gekennzeichnet, dass** an den Befestigungselementen (22) Sicherungserhebungen (47, 47') vorhanden sind, die in gekoppeltem Zustand zweier Befestigungselemente (22) in das jeweils andere Befestigungselement (22) eingreifen, um die Befestigungselemente (22) in ihrer axialen Relativposition lösbar zu fixieren.

20. Leitungsführungseinrichtung nach einem der Ansprüche 16 bis 19, **dadurch gekennzeichnet, dass** mehrere miteinander koppelbare Befestigungselemente (22) rahmenartig mit rechteckiger Querschnittskontur ausgebildet sind.

21. Leitungsführungseinrichtung nach Anspruch 20, **dadurch gekennzeichnet, dass** außen an den beiden großflächigen oberen und unteren Wänden (25a, 25b) der Befestigungselemente (22) zueinander komplementäre Kopplungsmittel (45, 46) vorhanden sind, die ein höhenmäßiges Verknüpfen mehrerer Befestigungselemente (22) ermöglichen.

22. Leitungsführungseinrichtung nach Anspruch 20 oder 21, **dadurch gekennzeichnet, dass** außen an den beiden schmalen Seitenwänden (26a, 26b) der Befestigungselemente (22) zueinander komplementäre Kopplungsmittel (45, 46) vorhanden sind, die ein Verknüpfen mehrerer Befestigungselemente (22) in ihrer Breitenrichtung ermöglichen.

23. Leitungsführungseinrichtung nach einem der Ansprüche 9 bis 22, **dadurch gekennzeichnet, dass** das mindestens eine Befestigungselement (22) mit zu seiner Fixierung an einer Tragstruktur (2, 3) geeigneten Befestigungsmitteln (36) ausgestattet ist, insbesondere mit mindestens einem eine Schraubbefestigung ermöglichenden Befestigungsloch (37) und/oder mit mindestens einer Befestigungsnut (42).

24. Leitungsführungseinrichtung nach einem der Ansprüche 1 bis 23, **dadurch gekennzeichnet, dass** mindestens ein Leitungsführungsstrang (5) an seiner Außenfläche mit Haftmitteln (44) versehen ist, insbesondere in Gestalt mindestens eines zweckmäßigerweise als Selbstklebestreifen ausgebildeten Klebestreifens.
